Europäisches Patentamt

(19) European Patent Office

Office européen des brevets

(11) Publication number: **0 034 388**
**B1**

(12) **EUROPEAN PATENT SPECIFICATION**

(45) Date of publication of patent specification: **05.12.84**

(21) Application number: **81200132.9**

(22) Date of filing: **04.02.81**

(51) Int. Cl.³: **F 16 H 19/00**

(54) **Device for converting a rotary motion into a linear motion.**

(30) Priority: **13.02.80 NL 8000907**

(43) Date of publication of application:
**26.08.81 Bulletin 81/34**

(45) Publication of the grant of the patent:
**05.12.84 Bulletin 84/49**

(84) Designated Contracting States:
**DE FR GB IT NL**

(56) References cited:
**DE-A-2 709 006**
**DE-B-1 203 079**
**FR-A-2 351 327**
**NL-A-7 509 605**
**US-A-3 589 202**

(73) Proprietor: **SKF Industrial Trading &**
**Development Company B.V.**
**Kelvinbaan 16 P.O. Box 50**
**NL-3430 AB Nieuwegein (NL)**

(72) Inventor: **Kumpar, Zvonimir Zvonko**
**Fröbellaan 44**
**NL-3706 TH Zeist (NL)**

(74) Representative: **Merkelbach, B.**
**SKF Engineering & Research Centre B.V.**
**Kelvinbaan 16 P.O. Box 50**
**NL-3430 AB Nieuwegein (NL)**

Courier Press, Leamington Spa, England.

## Description

The invention concerns a device for converting a rotary motion into a linear motion, comprising a housing having a cylindrical bore wherein has been placed a plurality of rolling bearings, the innermost races of which have an inside diameter greater than the outside diameter of a shaft extending through the bore of the housing and the innermost races of the rolling bearings placed therein, these bearings having been placed in the housing such that their center lines are at an angle to the center line of the shaft and their innermost races rest against the shaft, each of the rolling bearings having been confined in a supporting unit, mounted in the bore and having in the center a cylindrical aperture, in such fashion that the center line of each bearing is at an angle to the center line of the aperture and the annular inner surface of the innermost race projects inwardly with respect to the inner surface of the aperture, which supporting units being placed resting against one another in the bore of the housing. Such a device is disclosed in the French patent 2,351,327.

In the known device the rolling bearings are retained in the housing by an element which has a relatively high surface tolerance with both the housing and bearing outer race ring. Removing or replacing of a bearing in case of failure is therefore rather difficult. Moreover when the bearings are set in the mounting position adjusting of these bearings is not possible.

The object of the invention is to procure a device of the type mentioned whereby the rolling bearings can easily be removed or exchanged and adjusted in relation to the shaft, as well as essential parts manufactured at relatively low costs.

These objects are accomplished in that each supporting unit consists of two parts resting against each other, and in each part, in the side surface by which the part rests against the other part, a recess is formed such that the recesses of said parts together with each other form a cavity in which the said rolling bearing is received, while means are present for interconnection of said two parts and wherein said supporting unit is held radially in position relative to said shaft by means of an adjustable pressure element mounted in the wall of said housing.

Due to the measure that a rolling bearing is partly encased by said support unit which is set under adjusting means, the benefit is obtained that a unit can be made of a light or synthetic material.

In an advantageous embodiment each unit-pressure-element comprises a spring which at one end is in engagement with a cap provided with a screw thread, which cap is screwed through the wall of the housing into an aperture provided with screw thread.

Preferably the bore of the housing is closed off at both ends by covers provided with stubs projecting outwardly, on which the inner race of a rolling bearing is mounted for rotary support of said housing. Due to this measure rotating of the housing at low friction is realized.

The invention is explained in greater detail by means of the drawing in which

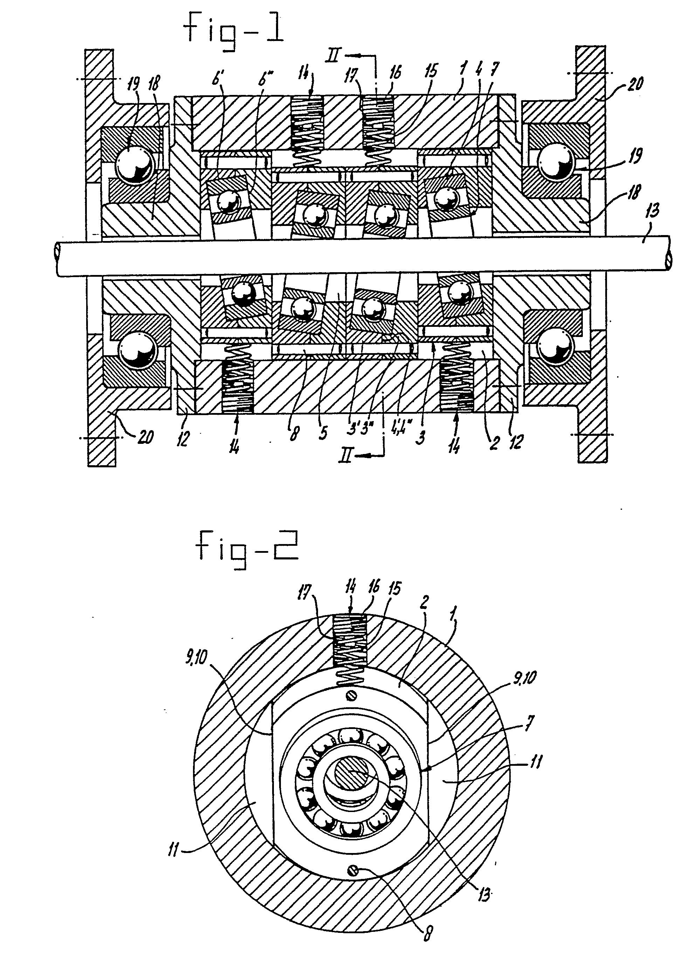

Fig. 1 shows a device pursuant to the invention in longitudinal section, and

Fig. 2 is a section along line II—II in Figure 1.

As shown in the drawing, the device comprises a housing 1 having a cylindrical bore 2, in which has been placed a plurality of units 3 with rolling bearings 4 confined therein. Each unit 3 is made up of two parts 3' and 3", the side surfaces 4 of which rest against one another. Each part 3', 3" is provided with a central aperture, so that a continuous central aperture 5 is formed. In the parts 3' and 3" recesses 6' or 6" have been made in the side surface 4', 4" such that there is formed a cavity wherein rolling bearings 7 may be confined. In assembly of the units 3 first a rolling bearing 7 is placed in a recess 6' or 6" of a part 3' or 3" and then the other part 6" or 6' is placed on the part first mentioned, following which these parts are joined together by means of the pins 8.

When the various units 3 have been assembled in this manner, the units 3 are then slipped into the bore 2, these units being held in a given radial position owing to the units having been provided with flattened side edges 9 which rest against the surfaces 10 of the segments 11 fitted in the bore 2.

After the units 3 have been slipped into the bore 2 the covers 12 are attached to the housing 1, whereby the units 3 are held fast adjacent to one another in the bore 2. After that the shaft 13 is inserted and then the various units 3 are shifted by means of the pressure elements 14 in directions transverse to the center line of the shaft 13 inside the bore 2 so that the inner races of the rolling bearings 7 come to lie against the shaft 13.

Each pressure element 14 consists of a spring 15 which is in engagement with a cap 16 provided with screw thread, which cap is screwed through the wall of the housing 1 into an aperture 17 provided with screw thread.

Each cover 12 is provided with a stub 18 for receiving the inner race of a bearing 19, so that the housing 1 may be supported rotary by means of the supporting elements 20 provided with a surrounding flange.

The parts 3', 3" may be made of a synthetic material, where connecting means may be formed simultaneously upon formation of these parts, so that no pins or similar connecting means need be applied.

It will be evident that on rotation of the housing 1 in one direction of rotation the shaft 13 is moved axially in one direction, and on rotation of the housing 1 in the other direction of rotation the shaft 13 will be displaced in the other axial direction. Such a device is in particular suitable, for example, for operation of a sliding door, where it is important that it not be possible for parts of the body of a person passing through the closing door to be badly caught. Since the shaft 13 will be displaced in the case of even very slight resistance, because the frictional transfer of rotational moment to the shaft is very small, the danger that a part of the body may be caught hard is obviated.

## Claims

1. Device for converting a rotary motion into a linear motion, comprising a housing (1) having a cylindrical bore (2) wherein has been placed a plurality of rolling bearings (7), the innermost races of which have an inside diameter greater than the outside diameter of a shaft (13) extending through the bore (2) of the housing (1) and the innermost races of the rolling bearings (7) placed therein, these bearings having been placed in the housing such that their center lines are at an angle to the center line of the shaft (13) and their innermost races rest against the shaft (13), each of the rolling bearings having been confined in a supporting unit (3), mounted in the bore (2) and having in the center a cylindrical aperture, in such fashion that the center line of each bearing (7) is at an angle to the center line of the aperture (5) and the annular inner surface of the innermost race projects inwardly with respect to the inner surface of the aperture (5), which supporting units (3) being placed resting against one another in the bore of the housing characterized in that each supporting unit (3) consists of two parts (3', 3") resting against each other, and in each part, in the side surface by which the part rests against the other part, a recess (6) is formed such that the recesses (6', 6") of said parts together with each other form a cavity (6) in which the said rolling bearing (7) is received, while means (8) are present for interconnection of said two parts (3', 3") and wherein said supporting unit (3) is held radially in position relative to said shaft (13) by means of an adjustable pressure element (14) mounted in the wall of said housing (1).

2. Device according to claim 1, characterized in that the units (3) are made of a light or synthetic material.

3. Device according to claims 1 or 2, characterized in that each unit-pressure-element (14) comprises a spring (15) which at one end is in engagement with a cap (16) provided with a screw thread, which cap (16) is screwed through the wall of the housing (1) into an aperture (17) provided with screw thread.

4. Device according to claims 1—3, characterized in that the bore (2) of the housing (1) is closed off at both ends by covers (12) provided with stubs (18) projecting outwardly, on which the inner race of a rolling bearing (19) is mounted for rotary support of said housing (1).

## Patentansprüche

1. Vorrichtung zum Umwandeln einer drehenden in eine lineare Bewegung, welche ein Gehäuse (1) mit einer zylindrischen Bohrung (2) aufweist, in dem mehrere Wälzlager (7) angeordnet sind, von denen die inneren Laufkränze einen Innendurchmesser besitzen, welcher größer als der Außendurchmesser der Welle (13) ist, die sich durch die Bohrung (2) des Gehäuses (1) und durch die darin befindlichen innersten Laufkränze der Wälzlager (7) erstreckt, wobei diese Lager derartig im Gehäuse angeordnet sind, daß ihre Mittellinien zur Mittellinie der Welle (13) einen Winkel bilden und ihre innersten Laufkränze an der Welle (13) anliegen, und jedes Wälzlager in einer Haltevorrichtung (3) gehalten wird, die in der Bohrung (2) befestigt ist und welche in ihrem Zentrum eine zylindrische Öffnung aufweist, derart, daß die Mittellinie jedes Lagers (7) zur Mittellinie der Öffnung (5) einen Winkel bildet und die innere ringförmige Fläche des innersten Laufkranzes sich in bezug auf die innere Fläche der Öffnung (5) nach innen erstreckt, und die Haltevorrichtungen (5) derartig in der Bohrung des Gehäuses (5) angeordnet sind, daß sie gegeneinander anliegen, dadurch gekennzeichnet, daß jede Haltevorrichtung (3) aus zwei gegenseitig anliegenden Teilen (3', 3") besteht, und daß in der Seitenfläche jedes Teiles, die gegen das andere Teil anliegt, eine Aussparung (6) gebildet ist, so daß die Aussparungen (6', 6") dieser Teile miteinander einen Hohlraum (6) bilden, in dem sich das Wälzlage (7) befindet, daß Befestigungsmittel (8) vorhanden sind, um die zwei Teile (3', 3") miteinander zu verbinden und daß die Haltevorrichtung (3) mit Hilfe eines in der Wand des Gehäuses (1) befestigten und einstellbaren Druckelementes (14) relativ zur Welle (13) in einer radialen Lage gehalten wird.

2. Vorrichtung nach Anspruch 1, dadurch gekennzeichnet, daß die Haltevorrichtung (3) aus einem leichten Material oder aus Kunststoff besteht.

3. Vorrichtung nach Anspruch 1 oder 2, dadurch gekennzeichnet, daß jedes Druckelement (14) eine (15) Feder aufweist, die an einem Ende mit einer Schraubkappe (16) versehen ist, wobei die Kappe (16) durch die Wand des Gehäuses in eine Öffnung (17) mit Schraubgewinde geschraubt ist.

4. Vorrichtung nach Anspruch 1 bis 3, dadurch gekennzeichnet, daß die Bohrung (2) des Gehäuses (1) an beiden Enden mit einer Abdeckung (12) abschließt, welche jeweils mit einem Stutzen versehen (18) ist, der sich nach außen erstreckt, auf dem jeweils der innere Laufkranz eines Wälzlagers (19) zur leichteren Drehung des Gehäuses (1) befestigt ist.

## Revendications

1. Dispositif pour tranformer un mouvement circulaire en mouvement rectiligne, comprenant un boîtier (1) avec un alésage cylindrique (2) dans lequel ont été placés une pluralité de roulements (7) dont les bagues intérieures ont un diamètre intérieur qui est supérieur au diamètre extérieur d'un arbre (13) passant dans l'alésage (2) du boîtier (1) et dans les bagues intérieures des roulements (7) placés dans le boîtier, ces roulements ayant été montés dans le boîtier de telle manière que leurs axes forment un angle avec l'axe de l'arbre (13) et que leurs bagues intérieures s'appuient sur l'arbre (13), chacun des roulements ayant été enfermé dans un élément (3) de support monté dans l'alésage (2) et percé en son centre d'un trou cylindrique, de telle manière que l'axe de chaque roulement (7) forme un angle avec l'axe du trou (5) et que la surface intérieure annulaire de la bague intérieure est en saillie vers l'intérieur par rapport à la surface intérieure du trou (5), ces éléments (3) de support étant placés les uns contre les autres dans l'alésage du boîtier, ce dispositif étant caractérisé en ce que chaque élément (3) de support est constitué de deux parties (3', 3") s'appuyant l'une contre l'autre, un évidement (6) étant formé dans la face latérale de chaque partie, qui sert de face d'appui d'une partie contre l'autre, de telle sorte que les évidements (6', 6") de ces parties constituent ensemble une cavité (6) dans laquelle est logé le roulement (7), tandis que des moyens (8) sont prévus pour relier ces deux parties (3', 3"), l'élément (3) de support étant maintenu radialement en position par rapport à l'arbre (13) par l'intermédiaire d'un élément (14) de pression réglable monté dans la paroi du boîtier (1).

2. Dispositif suivant la revendication 1, caractérisé en ce que les éléments (3) sont constitués d'un matériau léger ou synthétique.

3. Dispositif suivant l'une des revendications 1 ou 2, caractérisé en ce que chaque élément (14) de pression de l'élément de support est constitué d'un ressort (15) qui est en contact, à une extrémité, avec un bouchon (16) pourvu d'un filet de vis, ce bouchon (16) étant vissé à travers la paroi du boîtier (1) dans une ouverture taraudée (17).

4. Dispositif suivant l'une quelconque des revendication 1 à 3, caractérisé en ce que l'alésage (2) du boîtier (1) est fermé à ses deux extrémités par des flasques (12) pourvus de bossages (18) en saillie vers l'extérieur, sur lesquels est montée la bague intérieure d'un roulement (19) en vue d'assurer un support de rotation du boîtier (1).

Fig-1

Fig-2